# EUROPÄISCHE PATENTSCHRIFT

(11) **EP 1 693 134 B1**
(45) Veröffentlichungstag und Bekanntmachung des Hinweises auf die Patenterteilung: **06.04.2011**
(21) Anmeldenummer: 06003089.7
(22) Anmeldetag: 15.02.2006
(51) Int. Cl.: B23B 31/08, B23G 1/46

(54) **Gewindebohreraufnahme**
Holder for a thread-forming tap
Porte-taraud

(30) Priorität: 18.02.2005 DE 102005007708
(43) Veröffentlichungstag der Anmeldung: 23.08.2006
(73) Patentinhaber: Zettl GMBH, 87488 Betzigau (DE)
(72) Erfinder: Pfob, Franz, 87463 Betzigau (DE)
(74) Vertreter: Vonnemann, Gerhard

(56) Entgegenhaltungen:
- EP-A- 0 360 947
- DE-A1- 2 001 007
- DE-C1- 10 147 581
- US-A- 3 967 830
- US-A- 4 752 088
- US-A- 4 810 138
- US-A- 5 076 740

## Beschreibung

Die Erfindung betrifft eine Spannzange zum Halten eines Schneidwerkzeuges, insbesondere eines Gewindeschneidwerkzeuges, gemäß dem Oberbegriff des Anspruchs 1.

Insbesondere Gewindebohrer, die sowohl eine Drehbewegung als auch eine axiale Bewegung ausführen, können durch mechanischen Zwang leicht Schaden nehmen. Deshalb müssen die Bewegungen der antreibenden Werkzeugmaschine möglichst exakt mit der durch die Form der Gewindebohrer vorgegebenen Kinematik übereinstimmen. Insbesondere durch Reibung und Spiel ist dies nicht immer zu gewährleisten. Auch bei der Umkehrung der Drehrichtung oder bei Reibungsänderungen sowie durch den Einfluß von Trägheltsmomenten der Spindel kann Zwang auf den Gewindebohrer ausgeübt werden. Ähnliche Probleme können auch bei Honwerkzeugen auftreten.

Zur Lösung dieses Problems sind beispielsweise spezifische Gewindebohrmaschinen bekannt, die die axialen Bewegungsunterschiede zwischen Bohrer und Maschine absorbieren können. Nachteilig an diesen Maschinen ist, daß sie nur für den einzelnen Bearbeitungszweck einsetzbar sind und darüber hinaus sehr voluminös sind.

In heutigen Bearbeitungszentren, ist es wünschenswert, den gegebenen Bearbeitungsraum möglichst vollständig ausnützen zu können. Voluminöse Werkzeuge beschränken den Bearbeitungsraum und damit auch die maximale Größe der zu bearbeitenden Werkstücke.

Dieses Problem wird durch eine gattungsgemäße Spannzange zum Halten eines Schneidwerkzeuges gelöst, wie sie in der DE 38 52 309 T2 beschrieben ist. Bei der bekannten Ausführungsform, wird das Schneidwerkzeug mittels radialer Schrauben gehalten. Der Nachteil, der dadurch schwer zu reproduzierenden axialen Lage des Werkzeugs, wird durch die selbstkompensierende axiale Bewegungsmöglichkeit der Zange gelöst. Je länger der Kompensierungsweg der Zange ist, desto einfacher ist die Einstelloperation. Die Zange erlaubt zusätzlich zu ihrer Spannfunktion eine in axialer Richtung wirkende Kompensierung von Bewegungsunterschieden bei gleichem Bauvolumen, wie das der Standardwerkzeuge, welche nur dem Spannen des Werkzeugs dienen Die Zange wird im Innern der Standardzangenhalter montiert, ohne daß ein Anpassen nötig ist und ohne den Raumbedarf im Vergleich zu austauschbaren Einsätzen zu erhöhen.

Bei dieser bekannten Ausführungsform müssen beim Werkzeugwechsel zum Spannen des Werkzeugschaftes radiale Schrauben angezogen werden, was unter ungünstigen Bedingungen auch die radiale Lage des Werkzeugs beeinflussen kann. Eine Verkürzung der Werkzeugwechseizeiten ist auch bei Gewindebohrern wünschenswert.

Um das Drehmoment vom äußeren Körper auf die Hülse zu übertragen, ist im Stand der Technik vorgesehen, daß die genannte Bohrung des äußeren Körpers wenigstens eine polygonale Mutterfläche aufweist, die mit wenigstens einer polygonalen Einsteckfläche der Hülse zusammenwirkt, um den äußeren Körper und die Hülse kinematisch in Drehung zu verbinden und ebenfalls die axiale Führung der genannten Hülse im Innern des genannten Körpers zu gewährleisten. Bei dieser Lösung muß die Länge der poligonalen Flächen bzw. die notwendige Führung den Kompensationsweg übersteigen, was die Baulänge der Spannzange nachteilig vergrößert.

Aufgabe der Erfindung ist es, die Produktivität der Bearbeitungszentren durch Verkürzung der Werkzeugwechselzeiten zu erhöhen, ohne nennenswert deren Bearbeitungsraum einzuschränken oder die Bearbeitungsgenauigkeit zu gefährden.

Diese Aufgabe wird bei einer Spannzange mit den Merkmalen des Anspruchs 1 gelöst.

Bei der Erfindung ist vorgesehen, dass die Hülse zur Mitnahme des Werkzeugs wenigstens eine polygonartige innere Mitnahmefläche aufweist, z.B. einen Vierkant, um das Werkzeug und die Hülse kinematisch in Drehung zu verbinden. Mit dieser Zange ist es möglich neben dem automatischen Kompensieren der axialen Bewegungsunterschiede des Gewindebohrers und des Spindelvorschubs das Werkzeug ohne große Einstelloperationen innerhalb kürzester Zeit zu wechseln. Die zusammenwirkenden Mitnahmeflächen stellen sicher, daß das notwendige Drehmoment über die Fläche rotationssymmetrisch von der Hülse auf das Werkzeug übertragen wird, so daß keine Kräfte quer zur Werkzeugachse entstehen, die die radiale Lage des Werkzeugs negativ beeinflussen könnten.

Mit Vorteil ist vorgesehen, dass auf die Hülse den Rückstellmitteln entgegen wirkend ein elastisches Material vorgesehen ist, das die Hülse zum äußeren Körper abstützend angeordnet ist. Auftretende Schwingungen werden dadurch gedämpft.

Dadurch, daß ein Anschlag zur axialen Abstützung eines Werkzeugs in der Hülse vorgesehen ist, kann eine reproduzierbare axiale Lage des Werkzeugs auch nach dem Werkzeugwechsel gewährleistet werden Als Referenzfläche dient vorzugsweise die hintere Stirnfläche des Werkzeugs. Wenn der Anschlag als Schraube ausgebildet ist, kann die Lage des Anschlags auch definierbar und feinfühlig verstellt werden. Dies ist wichtig, wenn sich die Länge des Gewindebohrers infolge eines neuen Anschliffs geändert hat.

Durch die Maßnahme, daß der äußere Körper und die Hülse, mindestens einen, vzw. axial angeordneten, Kanal für die Zufuhr eines Kühlschmiermittels aufweist, kann auch ein zentral geschmierter Gewindebohrer zum Einsatz kommen. Die Zufuhr des Kühlschmiermittels erfolgt erfindungsgemäß dann durch die axiale Bohrung, ohne die Baulänge nachteilig zu vergrößern.

Trotz der axialen Kompensationsmöglichkeiten kann das Kühlschmiermittel unter Druck zugeführt werden, ohne daß es zu größeren Leckverlusten kommt, dadurch, daß die Hülse ein Einsteckende aufweist, das in dem Kanal des äußeren Körpers angeordnet ist, wobei zwischen Einsteckende und Kanal eine Dichtung angeordnet ist.

Die Baulänge der Spannzange wird vorteilhaft kurz, weil die genannte Bohrung des äußeren Körpers mittels einer Platte (33) verschlossen ist, die wenigstens eine polygonale Mutterfläche aufweist, die mit wenigstens einer polygonalen Einsteckfläche der Hülse zusammenwirkt, um den äußeren Körper und die Hülse kinematisch in Drehung zu verbinden und ebenfalls die axiale Führung der genannten Hülse im Innern des genannten Körpers zu gewährleisten.

Die Montage der Platte erleichtert sich, wenn die Platte als Schraubring ausgebildet ist. Nach der Montage wird der Ring vorzugsweise durch Verkleben gegen ein unbeabsichtigtes Verdrehen beim Einsatz gesichert.

Wenn die Feder sich auf dem Schraubring abstützend angeordnet ist, der als Anschlag für eine Schulter eines Durchmessersprungs der Hülse vorgesehen ist, läßt sich die Spannzange auch einfach demontieren. Nach Lösen des Schraubrings können alle innen gelegenen Teile leicht aus der Spannzange entnommen werden.

Der Anschnitt des Gewindebohrers wird verbessert, wenn die Hülse einen Bund aufweist, dessen eine Seite eine Stützfläche der Feder und dessen andere Seite eine Stützfläche des elastischen Materials bildend angeordnet ist. Dadurch wird beim Anschnitt die Vorschubkraft langsam aufgebaut und mechanische Schwingungen gedämpft.

Durch die Maßnahme, daß der äußere Körper eine Bohrung zur Aufnahme der Hülse aufweist, deren verschiedene Durchmesser sich von außen nach innen verkleinernd ausgebildet sind, können die meisten Bearbeitungsvorgänge bei der Herstellung der Spannzange von einer Seite ausgeführt werden, so daß sich durch diese Konstruktion die Spannzange günstiger herstellen läßt.

Konstruktiv ist der Klemmkörper zum Schnellspannen des Werkzeugs besonders günstig , weil die Schnellspannhülse mindestens eine radiale Bohrung aufweist, in der eine Kugel vorgesehen ist, die sich auf einer kegeligen inneren Umfangsfläche abstützend als Klemmkörper angeordnet ist, wobei eine Feder die Schnellspannhülse in Richtung der sich verjüngenden kegeligen inneren Umfangsfläche bewegend vorgesehen ist.

Die Erfindung wird anhand einer Zeichnung erläutert, die ein bevorzugtes Ausführungsbeispiel darstellt.

Die Figuren der Zeichnung zeigen:
- Figur 1: einen Axialschnitt durch eine erfindungsgemäße Spannzange,
- Figur 2: eine werkzeugseitige Ansicht,
- Figur 3: eine dreidimensionale Ansicht der Spannzange von der werkzeugabgekehrten Seite,
- Figur 4: eine dreidimensionale Ansicht der Baugruppe Schnellwechselhülse mit Feder, elastisches Material und Anschlag.
- Figur 5: eine dreidimensionale Ansicht der Hülse,
- Figur 6: eine dreidimensionale Ansicht der Baugruppe Hülse, Rückstellmittel, Schraubring und Schnellwechselhülse und
- Figur 7: eine dreidimensionale Ansicht der Spannzange von der werkzeugzugewandten Seite

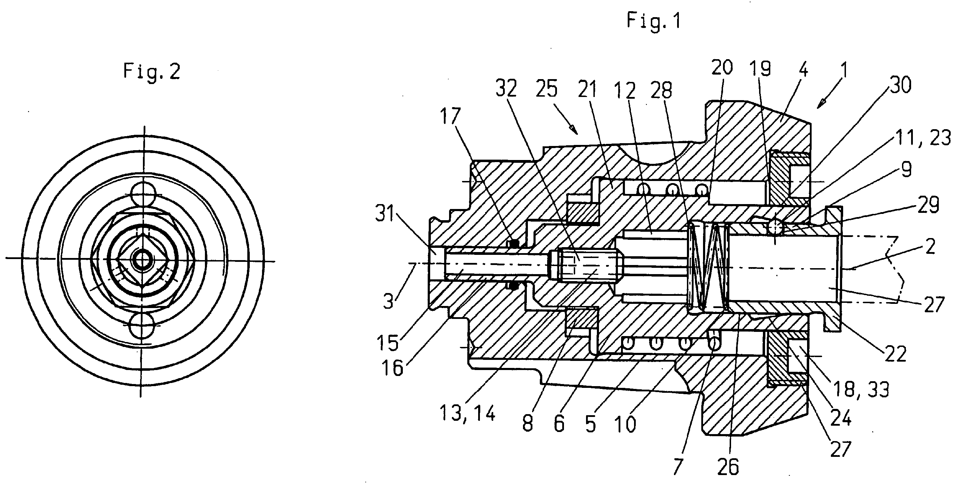

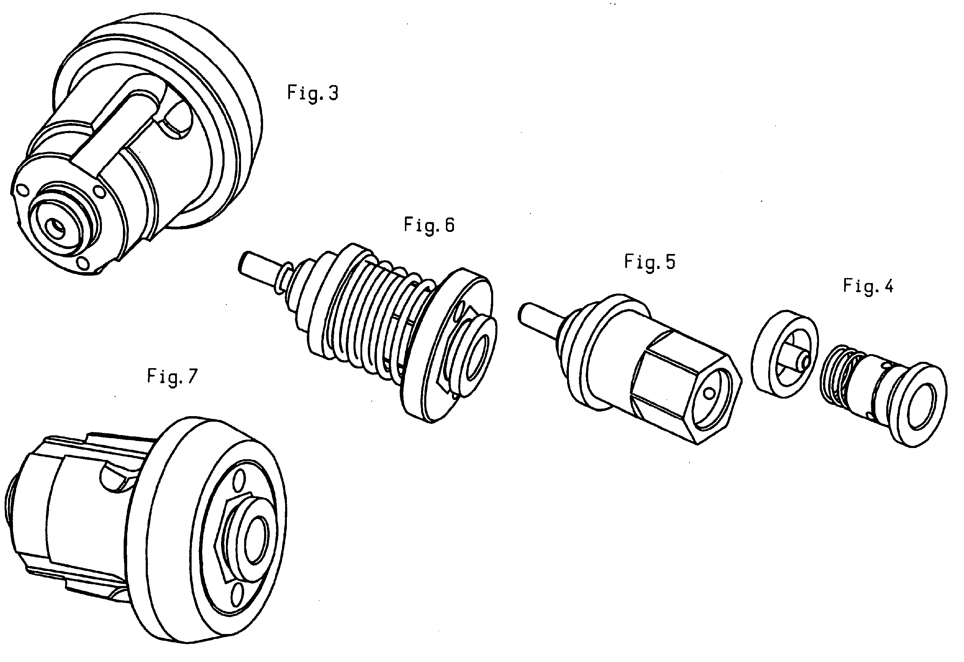

In den Figuren 1 und 2 sind mit Bezugsziffer 1 die erfindungsgemäße Spannzange bezeichnet. Die äußere Form 25 entspricht der einer gewöhnlichen Zange, die dazu bestimmt ist, durch einen bekannten Zangenhalter einer Maschinenspindel getragen zu werden. Beispielsweise kann sie als üblicher Morsekegel ausgestaltet sein oder u. a wie in Figur 3 gezeigt.

Die Spannzange besteht im wesentlichen aus drei teleskopartig ineinander gesteckte Teile, die im Wesentlichen rotationsmetrisch sind. Der äußere Körper 4 ist außen mit einer Form 25 versehen, die an die Aufnahme der antreibenden Maschine angepaßt ist. Außerdem weist der äußere Körper 4 eine axiale Bohrung 5 auf, die zur Aufnahme einer inneren, die axiale Kompensation der Bewegung ermöglichende Hülse 6 dient. Die Hülse ist dreidimensional in Figur 5 und als Baugruppe in der Figur 6 dargestellt. Die Hülse 6 ihrerseits hat eine Bohrung 26, in die ein Abschnitt mit einer kegeligen Umfangsfläche 24 eingearbeitet ist. Weitere Abschnitte der Bohrung 26 führen eine Schnellwechselhülse 9, deren Bohrung 27 schließlich zur Aufnahme eines nicht dargestellten Werkzeugschaftes dient, dessen Achse mit 2 bezeichnet ist.

Die die Kompensation ermöglichende Hülse 6 trägt außen einen Bund 21, der sich auf der einen Seite über ein elastisches Material 8 auf einem Absatz der Bohrung 5 abstützt, so daß die Vorschubkraft einer antreibenden Spindel über den äußeren Körper 4 und das elastische Material 8 auf den Bund 21 der Hülse 6 übertragen werden kann.

Auf der anderen Seite stützt sich der Bund 21 über eine Feder 7 auf einem Schraubring 18 ab, der in einen Innengewindeabschnitt 27 der Bohrung 5 eingeschraubt ist.

Die Feder 7 erlaubt es, dass die in dem Schraubring 18 und in der Bohrung 5 geführte Hülse 6 sich axial aus dem äußeren Körper 4 gegen die Rückstellkraft der Feder 7 herausbewegen kann, bis eine Schulter 20 der Hülse 6 gegen den Anschlag 19 des Schraubrings 18 bewegt ist. Der Abstand der Schulter 20 und des Anschlags 19 bestimmt den axialen Kompensationsweg.

Die Schnellwechselhülse 9 ist in der Bohrung 26 der Hülse 6 geführt. Figur 4 zeigt die Baugruppe der Schnellwechselhülse mit Feder in perspektivischer Ansicht. Eine in axialer Richtung wirkende Druckfeder 10, die sich auf einer Seite gegen eine Schulter 28 der Hülse 6 abstützt und auf der anderen Seite gegen die Stirnfläche der Schnellwechselhülse 9 drückt, übt eine Rückstellkraft auf die Hülse 9 in Richtung der sich verjüngenden kegelförmigen Fläche 24 aus. Dadurch wird die in einer radialen Bohrung 29 vorgesehene Kugel 23, die sich auf der kegeligen Fläche 24 abstützt, in Richtung der Werkzeugachse 2 gedrückt. Die Kugel 23 dient als Klemmkörper 11, der den in dieser Zeichnung nicht dargestellten Schaft eines in der Werkzeugachse 2 angeordneten Werkzeugs spannt. Auf den Umfang sind mehrere, vorzugsweise drei, solcher Kugeln verteilt.

Die Übertragung des Drehmoments einer Werkzeugmaschinenspindel erfolgt über die äußere Form 25, beispielsweise einem Morsekegel, auf den äußeren Körper 4. Von diesem über eine polygonale Flächenpaarung 30, in diesem Fall eine sechskantförmige Umfangsfläche, von dem äußeren Körper 4 über den eingeklebten Schraubring 18 auf die Hülse 6 und von dieser wiederum über die polygonale Umfangsfläche 12, in diesem Fall ein Vierkant, auf eine entsprechend geformte Gegenfläche des nicht dargestellten Werkzeugs.

Die axiale Lage des Werkzeugs kann durch die Schraube 14 eingestellt werden, die als Anschlag 13 dient. Die Schraube 14 ist innerhalb der Werkzeugachse 2 angeordnet, so daß beim Einstecken des Werkzeugs, die Stirnfläche des eingesteckten Werkzeugschaftes gegen die Schraube 14 anschlagen kann.

Die Schraube 14 kann mittels eines geeigneten Werkzeugs, z.B. einem Innensechskant, durch eine axial angeordnete Kühlschmiermittelbohrung 15 verstellt werden. Zur Zuführung eines Kühlschmiermittels durch die Maschinenachse 3 weist die Hülse 6 ein Einsteckende 16 mit einer Kühlschmiermittelbohrung auf, das in einen entsprechenden Kanal 31 des äußeren Körpers 4 eingesteckt ist. Der Spalt zwischen äußerem Körper 4 und dem Einsteckende 16 der Hülse 6 ist durch Dichtung 17 geschlossen. Das Kühlschmiermittel kann somit in der Maschinenachse 3 durch den Kanal 31 und die Kühlschmiermittelbohrung 15 sowie durch einen in der Schraube 14 vorgesehenen Kanal 32 bis zum stirnseitigen Ende eines zentral geschmierten, nicht dargestellten Werkzeugs geführt werden.

Ein in der Spannzange befindliches Werkzeug wird durch Drücken des Bundes 22 in Richtung der Hülse 6 freigegeben. Bei der Axialbewegung der Schnellwechselhülse 9 in Richtung Hülse 6 bewegt sich die Kugel 23 auf der kegeligen Umfangsfläche 24 radial nach außen und kann so den Werkzeugschaft freigeben. Vorzugsweise sind auf dem Umfang der Hülse 9 mehrere derartige Kugeln 23 symetrisch verteilt. Nach der Entnahme des Werkzeugs, kann der Einspannschaft eines neuen Werkzeuges eingesteckt werden, bis seine Stirnfläche gegen die Schraube 14 anschlägt. Durch drehen der Hohlschraube 14 kann die axiale Lage des Werkzeugs voreingestellt werden. Anschließend wird dann die Spannzange mit dem Werkzeug in die Spindel der Werkzeugmaschine eingesteckt.

Wie erwähnt zeigen die Figuren 3 und 7 die erfindungsgemäße Spannzange aus verschiedenen Richtungen in einer dreidimensionalen Darstellung und die Figuren 4, 5 und 6 Baugruppen bzw. Teile der Spannzange.

Auf diese Weise ist eine Spannzange mit axialem Kompensationsweg für Gewindebohrer geschaffen, bei der die Gewindebohrer besonders schnell zu wechseln sind.

### BEZUGSZEICHENLISTE

- 1.: Spannzange
- 2.: Werkzeugachse
- 3.: Maschinenachse
- 4.: äußerer Körper
- 5.: Bohrung
- 6.: Hülse
- 7.: Rückstellmittel
- 8.: elastisches Material
- 9.: Schnellwechselhülse
- 10.: Feder
- 11.: Klemmkörper
- 12.: Umfangsfläche, Mitnehmervierkant
- 13.: Anschlag
- 14.: Schraube
- 15.: Kanal
- 16.: Einsteckende
- 17.: Dichtung
- 18.: Schraubring mit Innensechskant
- 19.: Anschlag
- 20.: Schulter
- 21.: Bund
- 22.: Bund
- 23.: Kugel
- 24.: kegelige innere Umfangsfläche
- 25.: Form
- 26.: Bohrung
- 27.: Innengewinde
- 28.: Schulter
- 29.: radiale Bohrung
- 30.: polygonale Flächenpaarung
- 31.: Kanal
- 32.: Kanal
- 33.: Platte

## Patentansprüche

1. Spannzange zum Halten eines Schneidwerkzeuges, insbesondere eines Gewindeschneidwerkzeuges, welches einerseits einer Drehbewegung um seine Achse und andererseits einer axialen Bewegung unterworfen ist, wobei die Spannzange dazu bestimmt ist, durch einen Zangen halter getragen zu werden, welcher Zangenhalter auf der Achse einer Werkzeugmaschine montiert ist, wobei die genannte Spannzange eine Hülse und einen äusseren Körper mit einer Bohrung aufweist, wobei die Hülse kinematisch mit dem äusseren Körper durch Mittel drehverbunden ist, im Innern der Bohrung axial bewegbar ist und Mittel aufweist, um das Schneidwerkzeug zu halten, wobei die äussere Form des äusseren Körpers der Aufnahmeform des Zangenhalters entspricht, wobei Mittel, die die axiale Bewegung der Hülse im Innern der Bohrung begrenzen, vorgesehen sind, sowie elastisch verformbare Rückstellmittel zu einer vorbestimmten Ruhestellung für die Hülse vorgesehen sind, **dadurch gekennzeichnet, dass** die Mittel zum Halten des Werkzeugs eine axial bewegliche in der Spannzange bzw. in der Hülse geführte Schnellwechselhülse (9) ist, welche Schnellwechselhülse über eine Feder (10) axial gegenüber der Hülse (6) abgestützt ausgebildet ist und dass ein Klemmkörper (11, 23) zum Klemmen des Werkzeugs vorgesehen ist, wobei die Schnellspannhülse (9) mindestens eine radiale Bohrung (29) aufweist, in der eine Kugel (23) vorgesehen ist, die sich auf einer kegeligen inneren Umfangsfläche (24) abstützend als Klemmkörper (11) angeordnet ist, wobei eine Feder (10) die Schnellspannhülse (9) in Richtung der sich verjüngenden kegeligen inneren Umfangsfläche (24) bewegend vorgesehen ist, wobei die genannte Bohrung des äusseren Körpers mittels einer Platte (33) verschlossen ist, die wenigstens eine polygonale Mutterfläche aufweist, die mit wenigstens einer polygonalen Einsteckfläche der Hülse zusammenwirkt, um den äusseren Körper und die Hülse kinematisch in Drehung zu verbinden und ebenfalls die axiale Führung der genannten Hülse im Innern des genannten Körpers zu gewährleisten.

2. Spannzange nach Anspruch 1, **dadurch gekennzeichnet, daß** die Hülse (6) zur Mitnahme des Werkzeugs wenigstens eine, vorzugsweise polygonartige innere, Mitnahmefläche (12) aufweist, um das Werkzeug und die Hülse(6) kinematisch in Drehung zu verbinden.

3. Spannzange nach Anspruch 1 oder 2, **dadurch gekennzeichnet, daß** auf die Hülse (6) den Rückstellmitteln (7) entgegen wirkend ein elastisches Material (8) vorgesehen ist, das die Hülse zum äußeren Körper (4) abstützend angeordnet ist.

4. Spannzange nach Anspruch 1, 2 oder 3 **dadurch gekennzeichnet, daß** ein Anschlag (13) zur axialen Abstützung eines Werkzeugs in der Hülse (6) vorgesehen ist, der vorzugsweise als Schraube (14) ausgebildet ist.

5. Spannzange nach einem der vorherigen Ansprüche, **dadurch gekennzeichnet, daß** der äußere Körper (4) und die Hülse (6), mindestens einen, vzw. axial angeordneten, Kanal (15) für die Zufuhr eines Kühlschmiermittels aufweist.

6. Spannzange nach Anspruch 5, **dadurch gekennzeichnet, daß** die Hülse (6) ein Einsteckende (16) aufweist, daß in dem Kanal (15) des äußeren Körpers (4) angeordnet ist, wobei zwischen Einsteckende (16) und Kanal (15) eine Dichtung (17) angeordnet ist.

7. Spannzange nach Anspruch **1, dadurch gekennzeichnet, daß** die Platte (33) als Schraubring (18) ausgebildet ist.

8. Spannzange nach Anspruch 1 oder 8, **dadurch gekennzeichnet, daß** die Feder (7) sich auf einem Schraubring (18) abstützend angeordnet ist, der als Anschlag (19) für eine Schulter (20) eines Durchmessersprungs der Hülse (6) vorgesehen ist.

9. Spannzange nach einem der vorstehenden Ansprüche, **dadurch gekennzeichnet, daß** die Hülse (6) einen Bund (21) aufweist, dessen eine Seite eine Stützfläche der Feder (7) und dessen andere Seite eine Stützfläche des elastischen Materials (8) bildend angeordnet ist.

10. Spannzange nach einem der vorstehenden Ansprüche, **dadurch gekennzeichnet, daß** der äußere Körper (14) eine Bohrung (5) zur Aufnahme der Hülse (4) aufweist, deren verschiedene Durchmesser sich von außen nach innen verkleinernd ausgebildet sind.

## Claims

1. A collet chuck for holding a cutting tool, in particular a thread-cutting tool which, on the one hand, is subjected to a rotational movement about its axis and, on the other, to an axial movement, wherein the collet chuck is intended to be carried by a chuck holder, which chuck holder is mounted on the axis of a machine tool, wherein said collet chuck has a sleeve and an outer body with a bore hole, wherein the sleeve is cinematically connected to the outer body in a rotational manner by means, is axially movable inside the bore hole and has means to hold the cutting tool, wherein the outer shape of the outer body corresponds to the receiving shape of the chuck holder, wherein means are provided which limit the axial movement of the sleeve inside the bore hole and elastically deformable resetting means to a predetermined rest position for the sleeve are provided, **characterized in that** the means for holding the tool is an axially movable quick-change sleeve (9) which is guided in the collet chuck or in the sleeve, which quick-change sleeve is configured to be axially supported with respect to the sleeve (6) via a spring (10), and that a clamping body (11, 23) for clamping the tool is provided, wherein the quick-change sleeve (9) has at least one radial bore hole (29) in which a ball (23) is provided which is supported on a conical inner circumferential surface (24) and arranged as clamping body (11), wherein a spring (10) is provided which moves the quick-change sleeve (9) towards the tapered conical inner circumferential surface (24), wherein said bore hole of the outer body is closed by means of a plate (33) which has at least one polygonal female surface which interacts with at least one polygonal insertion surface of the sleeve in order to cinematically connect the outer body to the sleeve in a rotational manner and also to ensure the axial guidance of said sleeve inside of said body.

2. The collet chuck according to claim 1, **characterized in that** for driving the tool, the sleeve (6) has at least one, preferably polygonal-like inner driving surface (12) to cinematically connect the tool to the sleeve (6) in a rotational manner.

3. The collet chuck according to claim 1 or 2, **characterized in that** an elastic material (8) is provided which acts on the sleeve (6) and against the resetting means (7) and that the sleeve is arranged supported with respect to the outer body (4).

4. The collet chuck according to claim 1, 2 or 3, **characterized in that** a limit stop (13) is provided in the sleeve (6) for axially supporting a tool, which limit stop is preferably configured as screw (14).

5. The collet chuck according to any one of the preceding claims, **characterized in that** the outer body (4) and the sleeve (6) have at least one, preferably axially arranged channel (15) for the supply of a cooling lubricant.

6. The collet chuck according to claim 5, **characterized in that** the sleeve (6) has an insertion end (16) which is arranged in the channel (15) of the outer body (4), wherein between insertion end (16) and channel (15), a seal (17) is arranged.

7. The collet chuck according to claim 1, **characterized in that** the plate (33) is configured as threaded ring (18).

8. The collet chuck according to claim 1 or claim 8, **characterized in that** the spring (7) is arranged supported on a threaded ring (18) which is provided as limit stop (19) for a shoulder (20) of a diameter step of the sleeve (6).

9. The collet chuck according to any one of the preceding claims, **characterized in that** the sleeve (6) has a collar (21), the one side of which is arranged to form a supporting surface of the spring (7) and the other side of which is arranged to form a supporting surface of the elastic material (8).

10. The collet chuck according to any one of the preceding claims, **characterized in that** the outer body (4) has a bore hole (5) for receiving the sleeve (6), the different diameters of which are configured such that they decrease from the outside inwards.

## Revendications

1. Pince de serrage pour retenir un outil de coupe, en particulier une filière, laquelle est soumise d'une part à une rotation sur son axe et d'autre part à un mouvement axial, sachant que la pince de serrage est destinée à être portée par une fixation de pince, laquelle fixation de pince est montée sur l'axe d'une machine-outil, sachant que ladite pince de serrage présente un manchon et un corps extérieur avec un alésage, sachant que le manchon est relié cinématiquement en rotation avec le corps extérieur par des moyens, est mobile axialement à l'intérieur de l'alésage et présente des moyens pour maintenir l'outil de coupe, sachant que la forme extérieure du corps extérieur correspond à la forme de réception de la fixation de pince, sachant que des moyens qui délimitent le mouvement axial du manchon à l'intérieur de l'alésage sont prévus, ainsi que des moyens de rappel déformables élastiquement vers une position prédéterminée de repos du manchon, **caractérisée en ce que** les moyens pour maintenir l'outil sont un manchon à changement rapide (9) mobile axialement dans la pince de serrage respectivement dans le manchon, lequel manchon à changement rapide est formé en étant appuyé par un ressort (10) axialement par rapport au manchon (6), et qu'un corps de serrage (11, 23) pour serrer l'outil est prévu, sachant que le manchon à changement rapide (9) présente au moins un alésage radial (29) dans lequel une bille (23) est prévue qui est placée comme corps de serrage (11) en s'appuyant sur une surface périphérique intérieure conique (24), sachant qu'un ressort (10) est prévu qui déplace le manchon à changement rapide (9) en direction de la surface périphérique intérieure conique (24) qui se rétrécit, sachant que ledit alésage du corps extérieur est fermé au moyen d'une plaque (33) qui présente au moins une surface maîtresse polygonale qui interagit avec au moins une surface d'insertion polygonale du manchon pour mettre le corps extérieur et le manchon cinématiquement en rotation et garantir également le guidage axial dudit manchon à l'intérieur dudit corps.

2. Pince de serrage selon la revendication 1, **caractérisée en ce que** le manchon (6) présente pour entraîner l'outil, au moins une surface d'entraînement (12) intérieure polygonale de préférence pour relier l'outil et le manchon (6) cinématiquement en rotation.

3. Pince de serrage selon la revendication 1 ou 2, **caractérisée en ce qu'**un matériau élastique (8) est prévu en agissant contre les moyens de rappel (7) sur le manchon (6), lequel est placé en appuyant le manchon (6) vers le corps extérieur (4).

4. Pince de serrage selon la revendication 1, 2 ou 3, **caractérisée en ce qu'**une butée (13) pour l'appui axial d'un outil est prévue dans le manchon (6), laquelle est une vis (14) de préférence.

5. Pince de serrage selon l'une des revendications précédentes, **caractérisée en ce que** le corps extérieur (4) et le manchon (6) présentent au moins un canal (15) placé de préférence axialement, pour amener un lubrifiant réfrigérant.

6. Pince de serrage selon la revendication 5, **caractérisée en ce que** le manchon (6) présente une extrémité d'insertion (16) qui est placée dans le canal (15) du corps extérieur (4), sachant qu'un joint (17) est placé entre l'extrémité d'insertion (16) et le canal (15).

7. Pince de serrage selon la revendication 1, **caractérisée en ce que** la plaque (33) est un anneau fileté (18).

8. Pince de serrage selon la revendication 1 ou 7, **caractérisée en ce que** le ressort (7) est placé en s'appuyant sur un anneau fileté (18) qui est prévu comme butée (19) d'un épaulement (20) d'un saut de diamètre du manchon (6).

9. Pince de serrage selon l'une des revendications précédentes, **caractérisée en ce que** le manchon (6) présente un épaulement d'appui (21), un côté de celui-ci formant une surface d'appui du ressort (7) et l'autre côté de celui-ci formant une surface d'appui du matériau élastique (8).

10. Pince de serrage selon l'une des revendications précédentes, **caractérisée en ce que** le corps extérieur (4) présente un alésage (5) pour recevoir le manchon (6), dont le diamètre différent se rétrécit de l'extérieur vers l'intérieur.
